# EUROPEAN PATENT APPLICATION

(11) **EP 1 422 885 A2**
(43) Date of publication of application: **26.05.2004**
(21) Application number: 03026553.2
(22) Date of filing: 18.11.2003
(51) Int. Cl.: H04L 12/56

(54) **Method and apparatus of exchanging transfer parameters in a mobile communication system**

(30) Priority: 19.11.2002 KR 2002072004
(71) Applicant: LG ELECTRONICS INC., Seoul (KR)
(72) Inventor: Oh, Myung Dae, Gangseo-gu Seoul (KR)
(74) Representative: von Hellfeld, Axel, Dr. Dipl.-Phys.

(57) **Abstract**

A method and apparatus are provided for exchanging transfer parameters in a mobile communication system. A terminal may transfer a PDP context request message to a network. The PDP context message may include an XID tag for determining a transfer parameter value. The network receives the PDP context request message from the terminal and transfers a PDP context accept message to the terminal as acceptance.

## Description

### BACKGROUND OF THE INVENTION

### 1. Field of the Invention

Embodiments of the present invention may relate to a method of exchanging transfer parameters between a terminal and a network of a mobile communication system. More particularly, embodiments of the present invention may relate to a method of exchanging parameters in a call procedure.

### 2. Background of Related Art

A mobile communication system may involve an authentication procedure and an encryption procedure between a mobile terminal and a network. A call procedure may be required to transfer user data in GPRS. The call procedure that precedes a PDP (Packet Data Protocol) context activation may occur before processing packet data. A normal user data transfer procedure may be carried out after these procedures.

Various parameter values that are required to transfer data after the call procedure may be determined by negotiation between the mobile terminal and the network. The negotiation may be called an XID negotiation (i.e., exchange IDentifier Negotiation) where the terminal handshakes with the network. After the call procedure and the XID negotiation, a data transfer may be executed between the terminal and the network.

During the PDP context activation, essential procedures for PDP context activation may be executed. These procedures may include proper user authentication and APN (Access Point Name) value, IP address (Internet Protocol Address) assignment, etc.

After the PDP context activation procedure, parameter values for each protocol layer may be exchanged between the terminal and the network to make an ideal state for the user terminal to transfer user data. The exchanged parameter values may include essential data for transfer such as compression existence and volume of transfer data, etc.

When the PDP context activation procedure and the XID negotiation procedure are completed, user data may be transferred using the user terminal.

However, since the PDP context activation procedure and the parameter exchanging procedure (XID Negotiation) are separately processed, user data can be transferred only after the two procedures are completed. Unnecessary procedures may therefore be executed because of the above-described two procedure executions. This delays the time in which to complete a series of procedures for transferring user data.

### SUMMARY OF THE INVENTION

Embodiments of the present invention may provide a method of exchanging parameters in a mobile communication system. A PDP context activation carried out between terminals and a network may include information about parameters so as to simplify procedures carried out in a call procedure between the terminals and the network.

A terminal or network may include an XID tag during the XID negotiation (i.e., the parameter negotiation) of the PDP context activation (GPRS data call). The XID tag may include two bits, for example. An XID tag of "00" may mean that the parameter should be a default value, an XID tag of "10" may mean that the parameter should be a last value, and an XID tag of"11" may mean that the parameter should be a re-negotiation value, etc:

The use of the default value may mean that values defined in the GSM specification or GPRS are used as the parameters. That is, parameter values defined in the GSM specification may be used after the PDP context activation procedure and without the XID negotiation procedure. User data may be directly transferred to the network, or user data may be transferred from the network to the terminal, only if the PDP context activation procedure is executed.

A last value of a parameter may mean that the terminal and the network should store the latest (or last) used parameter and have space for storing the latest used parameter. The latest used parameter may be used in a new PDP context activation. When such procedures are completed, an XID negotiation procedure may not be necessary.

When the XID tag indicates a re-negotiation value, the terminal and the network may negotiate new values unrelated to conventionally used values and then use the values for transferring data between each other.

Embodiments of the present invention may provide a method of exchanging a transfer parameter between a terminal and a network of a mobile communication system. The method may include the terminal transferring a PDP context request message to the network. The PDP context request message may include an XID tag for determining a parameter value. The network may receive the PDP context request message from the terminal and transfer a PDP context accept message accepting the PDP context request message. These procedures may occur before data transfer to the terminal.

When the terminal transfers the PDP context request message to the network, the XID tag may include an XID negotiation request message. The network receives the XID negotiation request message from the terminal and transfers a response back to the terminal.

The XID tag may include one or more bits. This may correspond to a default value or a latest used value based on a predetermined bit combination.

The XID tag may include one or more bits. In accordance with an XID negotiation procedure, the parameter values may be proposed by the terminal using a predetermined bit combination, or a new XID negotiation procedure may be executed.

When the parameter value is a default value, user data may be transferred to the network only after a PDP context activation procedure using values determined from the GSM specification.

The method may include the terminal and the network saving the latest used value as the parameter value when the parameter value is the latest used value as determined from the XID tag. User data may be directly transferred to the network after a PDP context activation procedure by using the latest used parameter.

Embodiments of the present invention may determine when the network receives a PDP context request message from the terminal and determine whether the PDP context request message includes an XID tag for determining a parameter value. When the XID tag is included, the method may include determining whether to use a manner proposed by the terminal based on the XID tag. When a manner proposed by the terminal is used, a PDP context accept message may be transferred to the terminal after setting the parameter as proposed by the terminal.

When the manner proposed by the terminal is not used, the method may further include sequentially executing the PDP context activation procedure and an XID negotiation procedure.

When the XID tag is not included, the PDP context activation procedure and an XID negotiation procedure may be sequentially executed.

The PDP context activation procedure may include the terminal transferring a PDP context request message to the network. The network receives the PDP context request message from the terminal and then transfers an accepting message to the terminal.

The XID negotiation procedure may further include the terminal transferring an XID negotiation request message to the network and the network receiving the XID negotiation request message during data transfer. The network may then transfer an accepting message to the terminal.

Other embodiments and salient features of the present invention will become apparent from the detailed description taken in conjunction with the annexed drawings. Additional advantages, objects, features and embodiments of the invention will be set forth in part in the description that follows and in part will become apparent to those having ordinary skill in the art upon examination of the following or may be learned from practice of the invention.

### BRIEF DESCRIPTION OF THE DRAWINGS

The following represents brief descriptions of the drawings in which like reference numerals represent like elements and wherein:

Fig. 1 illustrating a data transfer procedure of a GPRS mobile communication terminal according to one example arrangement;

Fig. 2 illustrating a GPRS data call procedure (PDP Context activation) and parameter exchanging (XID Negotiation) between a terminal and a network according to one example arrangement;

Fig. 3 illustrating a GPRS data call procedure (PDP Context activation) and parameter exchanging (XID Negotiation) between a terminal and a network according to an example embodiment of the present invention; and

Fig. 4 is a flow chart illustrating a parameter exchanging procedure according to an example embodiment of the present invention.

### DETAILED DESCRIPTION OF PREFERRED EMBODIMENTS

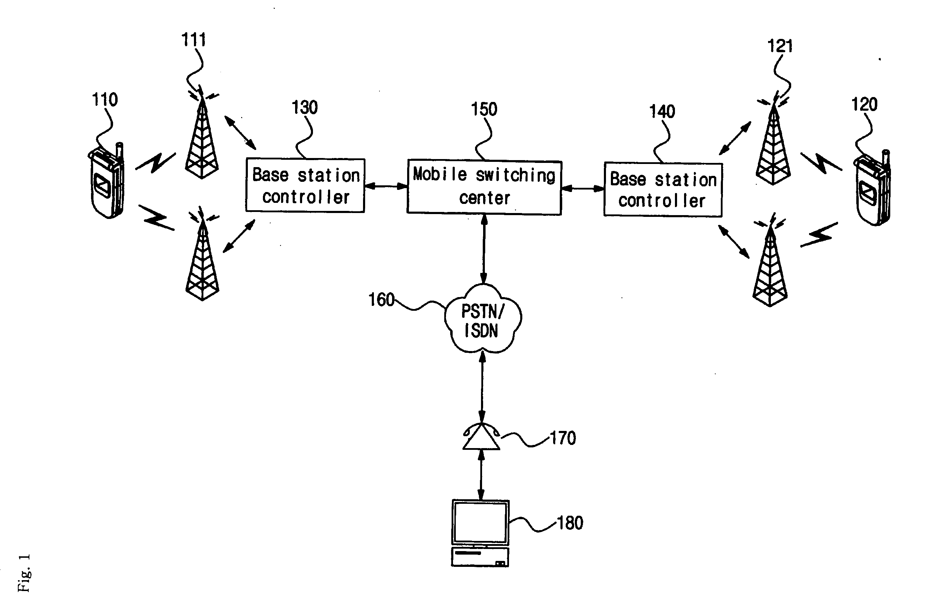

FIG. 1 shows a data transfer encryption technology of a mobile communication terminal according to one example arrangement. Other arrangements are also possible. As shown, a mobile communication system may include a mobile communication exchanging station (or mobile switching center) 150 connected to a Public Switched Telephone Network/Integrated Services Digital Network (PSTN/ISDN) 160, that may be connected with a computer 180 through a general wire telephone 170, or may be directly connected with the computer 180. A plurality of base station controllers 130 and 140 may be connected to the mobile communication exchanging station 150 and a plurality of base stations 111 and 121 may be connected to the plurality of base station controllers 130 and 140. A plurality of mobile communication terminals 110 and 120 may be connected to the plurality of base stations 111 and 121 through wireless links.

The plurality of base stations 111 and 121 may change a signal format from a wireless link to a wire link, and vise versa, when a signal is being transferred between the plurality of mobile communication terminals 110 and 120 and the mobile communication exchanging station 150. The base stations 111 and 121 may also provide a measured value of transmission/reception electric field intensity (i.e., the radio-wave reception intensity) of the plurality of mobile communication terminals 110 and 120 to the mobile communication exchanging station 150.

The plurality of base station controllers 130 and 140 may perform many operations including, but not limited to, connecting each of the plurality of base stations 111 and 121 to a cell operator, managing operations of a plurality of base stations, management of service status of base station hardware and software, resource assignment and configuration to a call traffic, collection of information on base station operation, sub-device monitoring relating to operation, monitoring and failure of a base station, and the like.

The mobile communication exchanging station 150 may provide a circuit switching service to the plurality of base station controllers 130 and 140 and the plurality of mobile communication terminals 110 and 120. The mobile communication station 150 may also perform a hand-off function.

When any terminal user calls using the mobile communication terminals 110 and 120, any one of the plurality of base stations 111 and 121 may be connected. As indicated above, a PDP context activation procedure may occur between the terminal and the network. Parameter values may be exchanged between the terminal and the network for the terminal to transfer user data.

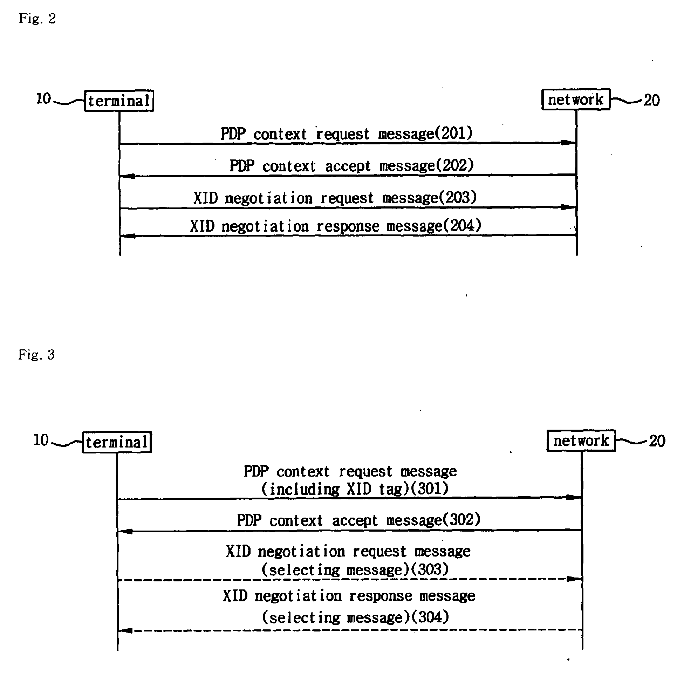

FIG. 2 illustrates a GPRS data call procedure (PDP Context activation) and parameter exchanging (XID Negotiation) carried out between a terminal 10 and a network 20 according to an example arrangement. Other arrangements are also possible.

In the case of a PDP context activation starting from the terminal 10 or a PDP context activation starting from the network 20, the terminal 10 transfers a PDP context request message 201 to the network 20 for starting the PDP context activation (i.e., GPRS Data Call).

The network 20 receives the PDP context request message 201 from the terminal 10, and then transfers a PDP context accept message 202 accepting PDP context activation only for the terminal 10 that requested the PDP context activation, with an authenticated user and accurate information. Basic information such as an IP address (Internet Protocol Address) may be obtained when the terminal 10 receives the PDP context accept message 202 from the network 20.

The terminal 10 may also execute an XID negotiation for negotiating SubNetwork Dependent Convergence Protocol (SNDCP) parameters and Logical Link Control (LLC) parameters, etc. that may be necessary to transfer data.

The terminal 10 may load (or provide) each requested parameter within an XID negotiation request message 203. The terminal 10 may transfer the XID negotiation request message 203 to the network 20.

The network 20 receives the XID negotiation request message 203 from the terminal 10, and then determines parameters sent from the terminal 10 or parameters determined from the network 20. The network 20 may then transfer an XID negotiation response 204 to the terminal 10.

When the terminal 10 receives the XID negotiation response 204 from the network 20, procedures of the PDP context activation, the XID negotiation, etc. are completed. User data may be made into packets to correspond with the exchanged parameters so that the user data may be transferred to the network 20.

However, since the PDP context activation procedure and the parameter exchanging procedure (XID Negotiation) are separately processed, user data can be transferred only after the two procedures are completed. Therefore, unnecessary procedures may be executed because of the two procedures. This may delay the time in which to complete a series of procedures for transferring user data.

Embodiments of the present invention may be described with respect to a GSM or GPRS mobile communication system and GSM or GPRS mobile communication terminals. However, embodiments of the present invention are also applicable to other types of mobile communication system and mobile communication terminals including, but not limited to, a CDMA mobile communication system and a CDMA mobile communication terminal.

Embodiments of the present invention may provide a mobile communication method. This may include transferring a PDP context request message between a terminal and a network. The PDP context request message may include an XID tag for determining at least a transfer parameter. The PDP context request message may be received by the network and a PDP context accept message may be transferred to the terminal.

FIG. 3 illustrates a GPRS data call procedure (PDP Context activation) and parameter exchanging procedure (XID Negotiation) between a terminal and a network according to an example embodiment of the present invention. Other embodiments are also within the scope of the present invention.

As shown in FIG. 3, the terminal 10 may begin a PDP context activation procedure by transferring a PDP context request message 301 to the network 20. The PDP context request message 301 may include an XID tag of two bits, for example. While this example describes the XID tag as having two bits, the XID tag may also include 3 or more bits.

For an XID tag of two bits, four bit combinations (00, 01, 10, 11) may be used to identify the parameter value or to correspond to a way to determine the parameter values. A first bit combination may correspond to a default value. A second bit combination may correspond to a latest used parameter value, and a third bit combination may correspond to a renegotiation value.

When the XID tag is not included within the PDP context request message, then a PDP context activation may be executed and a new XID negotiation may begin.

The network 20 receives the PDP context request message 301 from the terminal 10. The network 20 transfers a PDP context accept message 302 to the terminal 10 as a response message. The PDP context accept message 302 may include an XID tag response (such as of two bits) to correspond to the selection of a parameter (or parameter value).

For example, if the XID tag of two bits has only two cases of contents, an XID negotiation procedure may be one of the following example cases.

In a first case, a manner proposed by a terminal may be used. In a second case, a new XID negotiation may be executed.

When a new XID negotiation is to be performed between the terminal 10 and the network 20, the terminal 10 transfers an XID negotiation request message 303 related to an XID negotiation with the network 20. The network 20 receives the XID negotiation request message 303 from the terminal 10 and selects parameters suitable thereto. The network 20 then transfers an XID negotiation response message 304 to the terminal 10.

On the other hand, when a new XID negotiation procedure is not used, a series of negotiation procedures may be omitted. For example, the XID negotiation request message 303 and the XID negotiation response message 304 between the terminal 10 and the network 20 may be omitted.

While the XID negotiation procedure may be omitted, default values may be used as the parameter values for data transfer based on a terminal's proposed manner or based on the latest used values. Because mutual negotiation between the terminal 10 and the network 20 has been completed, there is no problem with data transfer.

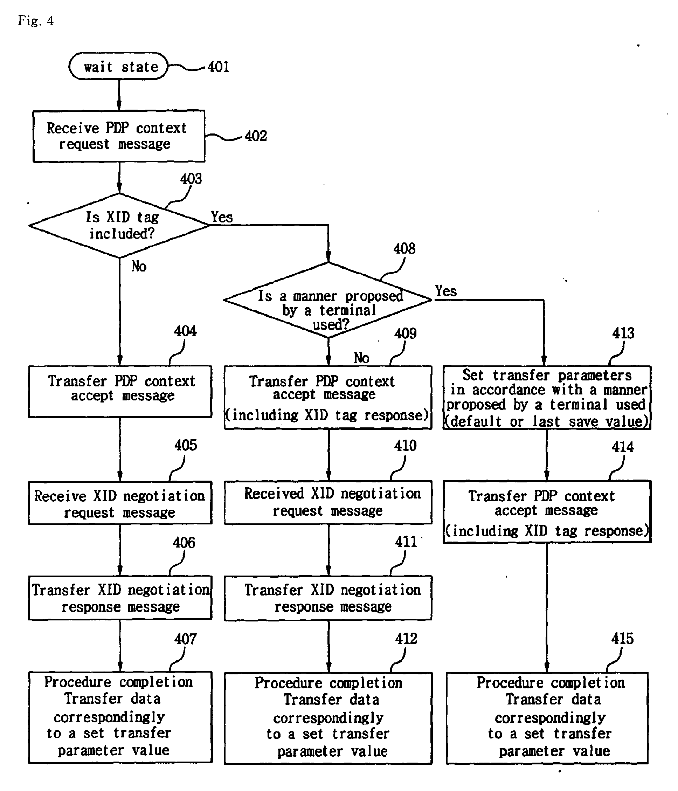

FIG. 4 is a flow chart illustrating a parameter exchanging procedure in a network system, a GPRS mobile communication system according to an example embodiment of the present invention. Other operations, orders of operations and embodiments are also within the scope of the present invention.

As shown in FIG. 4, a terminal transfers a PDP context request message to a network in a wait state (block 401). The network receives the PDP context request message from the terminal (block 402). The network then determines whether the received message includes an XID tag (block 403).

When the received message does not include the XID tag, then a PDP context accept message is transferred to the terminal in block 404. The terminal receives the PDP context accept message from the network and transfers an XID negotiation request message to the network. The network receives an XID negotiation request message from the terminal (block 405) and transfers an XID negotiation response message to the terminal (block 406). When the above procedures are completed, data may be transferred in block 407 according to the set transfer parameter values.

When the received message is determined to include the XID tag in block 403, it is determined whether a manner proposed by the terminal will be used (block 408). When the manner proposed by the terminal is not used (or if a manner is not proposed), a PDP context accept message (having an XID tag response) is transferred to the terminal (block 409). The terminal receives the PDP context accept message from the network, and then processes the PDP context accept message. The terminal transfers an XID negotiation request message to the network. The network receives the XID negotiation request message from the terminal (block 410) and transfers an XID negotiation response message to the terminal in block 411. When the above procedures are complete in block 412, data may be transferred according to the set transfer parameter values.

On the other hand, when the determination in block 408 is that the manner proposed by the terminal is used, transfer parameters may be set to default values or latest saved values as determined based on the manner proposed by the terminal in block 413. After setting the transfer parameters based on a default value or a latest saved value in block 413, a PDP context accept message (including the XID tag response) may be transferred to the terminal in block 414. When the above procedures are completed, data may be transferred according to the set transfer parameter values in block 415.

As described above, a terminal may request action of a network. The network may also request any action from the terminal.

The mobile communication device as described above may include a transmitting/receiving device to transmit and receive information with the mobile communication system (such as the base stations). The mobile device may include memory to store data as well as a processing device to perform various ones of the procedures and operations described above with respect to FIGS. 3 and 4, for example. This may include providing a PDP context request storage for transmission by the transmitting/receiving device. The PDP context message may include a transfer parameter tag for determining a transfer parameter value as described above.

Embodiments of the present invention have an effect that when user data are transferred through a GPRS, user data transfer procedures can be simplified by omitting an XID negotiation procedure for transferring procedure with a PDP context activation procedure.

The foregoing embodiments and advantages are merely exemplary and are not to be construed as limiting the present invention. The present teaching and disclosure can be readily applied to other types of apparatuses. The description of the present invention is intended to be illustrative, and not to limit the scope of the claims. Many alternatives, modifications, and variations will be apparent to those skilled in the art.

## Claims

1. A mobile communication method comprising:
transferring a PDP context request message between a terminal and a network, the PDP context request message including an XID tag for determining at least a transfer parameter value;
receiving the PDP context request message; and
transferring a PDP context accept message based on the received PDP context request message.

2. The method of claim 1, further comprising transferring data between the network and the terminal after transferring the PDP context accept message.

3. The method of claim 1, wherein the XID tag comprises at least one bit.

4. The method of claim 3, wherein the XID tag indicates that the transfer parameter value corresponds to a default value or a latest used value based on a predetermined bit combination.

5. The method of claim 4, further comprising transferring data between the network and the terminal after a PDP context activation procedure using values determined in a network system when the XID tag indicates that the transfer parameter value corresponds to the default value.

6. The method of claim 4, further comprising:
saving the latest used value of the parameter value when the XID tag indicates that the transfer parameter value corresponds to the latest used value; and
transferring data between the network and the terminal after a PDP context activation procedure using the latest used parameter.

7. The method of claim 1, wherein the PDP context accept message includes an XID tag response message.

8. The method of claim 7, wherein the XID tag comprises at least one bit.

9. The method of claim 8, wherein XID tag indicates that the parameter value corresponds to a manner proposed by the terminal, or that a new XID negotiation procedure is to be executed.

10. A method of exchanging data between a mobile terminal and a network, the method comprising:
determining whether a context request message includes a tag;
determining whether a manner proposed by the terminal is acceptable based on the tag; and
transferring a context accept message to the terminal after setting at least one transfer parameter based on the manner proposed by the terminal.

11. The method of claim 10, wherein the tag comprises an XID tag to determine at least one transfer parameter.

12. The method of claim 11, wherein the XID tag comprises at least one bit.

13. The method of claim 12, wherein the XID tag indicates a manner proposed by the terminal or that a new XID negotiation procedure is to be executed.

14. The method of claim 10, wherein when the manner proposed by the terminal is not acceptable, the method further comprises executing a PDP context activation procedure and an XID negotiation procedure.

15. A mobile communication method comprising:
determining whether a transfer parameter tag is associated with a context request message; and
transferring data between a mobile terminal and a network based on information corresponding to the transfer parameter tag.

16. The method of claim 15, wherein the context request message comprises a PDP context request message and the transfer parameter tag comprises an XID tag.

17. The method of claim 15, further comprising determining whether a transfer manner is acceptable.

18. The method of claim 17, further comprising performing a negotiation regarding a transfer parameter value if the transfer manner is determined not to be acceptable.

19. The method of claim 17, further comprising determining a transfer parameter value to correspond to one of a default value and a last saved value if the transfer manner is determined to be acceptable.

20. The method of claim 15, wherein the tag indicates one of the parameter value corresponds to a manner proposed by the mobile terminal and that a new negotiation procedure is to be executed.

21. A mobile communication device comprising:
a transmitting/receiving device to transmit and receive information;
a processing device to provide a PDP context request message for transmission by the transmitting/receiving device, the PDP context request message including a tag for determining at least a transfer parameter value.

22. The device of claim 21, wherein the tag comprises at least one bit.

23. The device of claim 21, wherein the tag indicates that the transfer parameter value corresponds to a default value or a latest used value based on a predetermined bit combination.

24. The device of claim 21, wherein the transmitting/receiving device transmits data to a network after a PDP context activation procedure using values determined in a specification when the tag indicates that the transfer parameter value corresponds to a default value.

25. The device of claim 21, wherein the transmitting/receiving device transfers data to the network after a PDP context activation procedure using a latest used parameter when the tag indicates that the transfer parameter value corresponds to a latest used value

26. The device of claim 21, wherein the tag indicates that the parameter value corresponds to one of a manner proposed by the mobile device and that a new XID negotiation procedure is to be executed.
